# FASCICULE DE BREVET EUROPEEN

(11) **EP 3 039 254 B1**
(45) Date de publication et mention de la délivrance du brevet: **19.04.2017**
(21) Numéro de dépôt: 14786973.9
(22) Date de dépôt: 21.08.2014
(51) Int. Cl.: F01D 25/16, B64D 27/26, F02K 3/06, F02C 7/20

(54) **SUSPENSION ISOSTATIQUE D'UN TURBORÉACTEUR PAR DOUBLE SUPPORT ARRIÈRE**
ISOSTATISCHE AUFHÄNGUNG EINES STRAHLTRIEBWERKS DURCH DOPPELTE HINTERE ABSTÜTZUNG
ISOSTATIC SUSPENSION OF A TURBOJET BY REAR DOUBLE SUPPORT

(30) Priorité: 28.08.2013 FR 1358221
(43) Date de publication de la demande: 06.07.2016
(73) Titulaire: Safran Aircraft Engines, 75015 Paris (FR)
(72) Inventeur: BELLABAL, François, Robert, F-77550 Moissy-Cramayel Cedex (FR); GALLET, François, F-77550 Moissy-Cramayel Cedex (FR); POISSON, Mathieu, Ange, F-77550 Moissy-Cramayel Cedex (FR)
(74) Mandataire: Gevers & Orès
(86) Numéro de dépôt international: PCT/FR2014/052109
(87) Numéro de publication internationale: WO 2015/028747

(56) Documents cités:
- EP-A2- 2 299 067
- CA-A1- 2 756 914
- GB-A- 2 021 696
- GB-A- 2 061 389

## Description

Le domaine de la présente invention est celui des turboréacteurs double flux. Il porte plus particulièrement sur les organes qui assurent leur rattachement à l'aéronef qu'ils propulsent.

Un moteur de propulsion, tel qu'un turboréacteur, peut être monté en divers endroits de l'avion, par accrochage à un mât ou à un pylône appartenant à la structure de ce dernier. Il peut ainsi être suspendu sous la voilure, fixé au fuselage, généralement à l'arrière, ou monté sur l'empennage par des moyens d'accrochage appropriés. Ces moyens d'accrochage ont pour fonction d'assurer la transmission des efforts mécaniques entre le moteur et la structure de l'avion. Les charges à prendre en considération sont notamment le poids du moteur selon l'axe vertical Z, sa poussée selon l'axe X du moteur, et les charges aérodynamiques latérales selon l'axe transversal Y. Les charges à transmettre comprennent aussi la reprise du couple de rotation autour de l'axe du moteur. Ces moyens doivent en outre absorber, sans les transmettre au mât ou au pylône, les déformations subies par le moteur pendant les différentes phases du vol résultant par exemple des variations dimensionnelles dues aux dilatations ou contractions thermiques.

Un mode habituel de suspension, par exemple, dans le cas d'un turbomoteur à soufflante, consiste à accrocher le moteur à un pylône appartenant à la structure de l'avion (fuselage ou aile) par une suspension ou attache avant et par une suspension ou attache arrière. La suspension avant est fixée en particulier sur le carter intermédiaire et la suspension arrière indirectement au carter d'échappement du flux primaire. Ces deux pièces constituent les éléments structuraux d'une turbomachine, sur lesquels l'ensemble des efforts sont repris.

Les turboréacteurs modernes sont des turbomachines double flux à fort taux de dilution, le flux d'air secondaire étant comprimé par un seul étage de compresseur dit soufflante. En sortie de cet étage il est guidé par un conduit directement dans une tuyère pour participer à la poussée du moteur. Il circule ainsi entre le corps principal du moteur, délimité par des carters, et un canal de flux froid (désigné généralement par l'acronyme anglais OFD pour Outer Fan Duct, ou Canal extérieur de soufflante). Pour des raisons de poids ce canal est de façon courante réalisé en matériau composite. Ce canal est classiquement fixé sur le moteur par des liaisons situées à ses deux extrémités longitudinales, une première fixation s'effectuant à l'amont sur le carter intermédiaire, et une seconde à l'arrière sur un anneau structural qui est porté par le carter d'échappement. La partie aval de la tuyère, comportant l'inverseur de poussée, vient se fixer sur l'anneau structural, qui comporte une bride d'attache à cet effet.

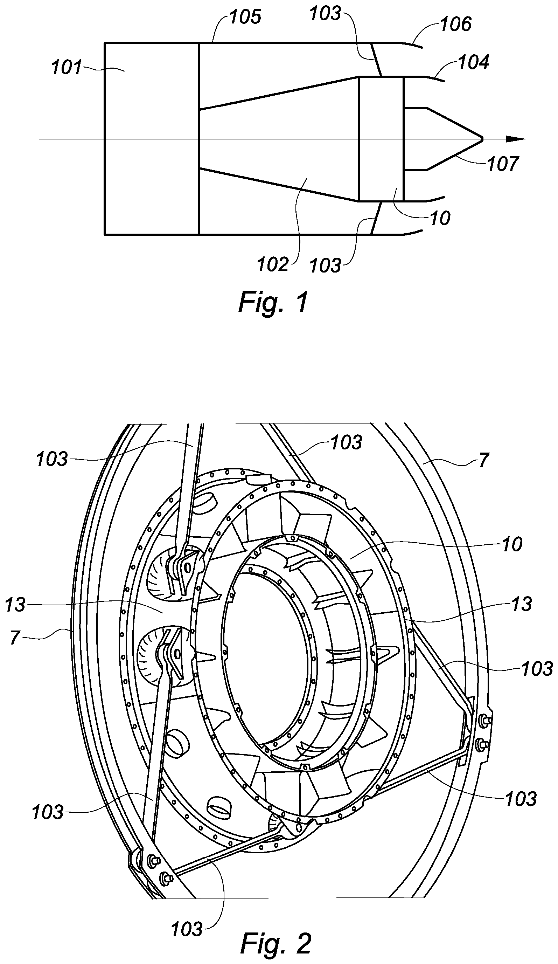

La liaison entre l'anneau du canal de flux froid et le carter d'échappement s'effectue généralement au moyen de bras qui traversent le flux froid. Dans des réalisations plus récentes, comme par exemple celle illustrée par la demande de brevet de la demanderesse publiée le 16/11/2012 sous le numéro FR2975131, elle peut être également assurée par un ensemble de bielles profilées, attachées d'une part au canal de flux froid et d'autre part sur le carter d'échappement. Dans ce cas la liaison est réalisée par un treillis hyperstatique de bielles, généralement au nombre de six ou de huit, alignées deux à deux, qui se rattachent en trois ou quatre points à l'anneau structural, comme cela est représenté sur la figure 2.

Un problème particulier a été rencontré sur les moteurs double flux, qui provenait, d'une part, de la relativement faible rigidité du canal de flux froid et, d'autre part, du bras de levier existant entre l'axe dans lequel pousse le moteur et la position décalée par rapport à celui-ci, des points d'attache du moteur. Ce bras de levier et le couple qui lui est associé tendaient à déformer le canal de flux froid et à lui faire prendre une forme dite en "banane", entre sa bride de fixation sur le carter intermédiaire et l'anneau structural. Ces distorsions de la carcasse du moteur sont bien évidement préjudiciables à un bon fonctionnement du moteur et à ses performances, du fait de l'apparition de jeux parasites entre ses pièces, et à la tenue mécanique des attaches qui sont sollicitées dans une direction non optimale. Pour répondre à ce problème, la demanderesse a proposé, dans sa demande de brevet FR1351414 déposée le 20 février 2013, de faire supporter l'anneau structural du canal de flux froid par un arceau relié à la structure de l'avion, au niveau de deux points de fixation au lieu d'un, les deux points étant diamétralement opposés sur la circonférence de l'anneau.

Cette amélioration, si elle élimine les déformations du canal de flux froid, conserve une liaison classique, réalisée par un treillis de bielles entre l'anneau structural et le carter d'échappement. Cet ensemble, qui est hyperstatique pour limiter les diverses déformations que l'anneau structural est susceptible de subir, génère une masse importante, du fait tant du nombre de bielles que des chapes qui sont nécessaires pour assurer la fixation de ces bielles sur le carter d'échappement.

Dans le document GB 2 021 696, un autre système de suspension est décrit. La demanderesse s'est alors attachée à simplifier l'ensemble de la liaison entre le pylône de l'avion et le carter d'échappement, dans le but d'en réduire la masse.

A cet effet, l'invention a pour objet un carter d'échappement équipé selon la revendication 1 d'un turboréacteur double flux. Ledit carter est équipé d'un moyen de support destiné à être rattaché à la structure de l'aéronef que le turboréacteur propulse, ledit carter, de forme cylindrique, comportant un moyeu central et des moyens de liaison entre ledit moyeu et ledit moyen de support aptes à transmettre les efforts générés à son niveau par le turboréacteur en utilisation normale, lesdits moyens de liaison s'étendant à partir du moyeu central pour traverser le flux froid dudit turboréacteur,
caractérisé en ce que lesdits moyens de liaison sont des bras rigidement fixés audit moyeu central.

La rigidité des bras associée à leur maintien ferme par le carter d'échappement permet de transmettre directement les efforts à un moyen de support dédié, sans les faire transiter par un anneau structural de support du canal de flux froid. Ce dernier peut donc être considérablement allégé.

Avantageusement les bras de liaison sont des bras radiaux, au nombre de deux, positionnés de façon diamétralement opposée l'un par rapport à l'autre. Cette configuration est alors isostatique, ce qui correspond au nombre minimal de moyens de liaison nécessaire et donc à un optimum dans la réduction de masse des moyens support du turboréacteur.

De façon préférentielle l'extrémité extérieure des bras est conformée pour se fixer sur le moyen de support par une liaison de type pivot glissant ou linéaire annulaire. Cela autorise les mouvements générés par les déformations différentielles des pièces.

Préférentiellement le moyen de support est un arceau de suspension sur lequel sont fixées les extrémités extérieures des bras et comportant une zone de fixation apte à transmettre à la structure de l'aéronef les efforts transmis par ledit carter d'échappement.

Plus préférentiellement, l'arceau de suspension peut être de forme circulaire entourant le canal de flux froid du turboréacteur.

Avantageusement, l'arceau de suspension est semi-circulaire, les bras de liaison étant au nombre de deux et positionnés selon un diamètre perpendiculaire au rayon passant par la zone de fixation.

Dans un mode particulier de réalisation le carter d'échappement équipé comporte en outre un moyen de liaison supplémentaire s'étendant entre son moyeu et ladite zone de fixation, ledit moyen de liaison supplémentaire étant, en utilisation normale, positionné en attente, sans transmission d'effort entre ledit moyeu et ladite zone. L'ajout de ce moyen permet en le dimensionnant pour couvrir spécifiquement les cas de pannes provoquant des charges exceptionnelles, de décharger les bras et l'arceau de support de cette fonction et de pouvoir alléger ces éléments au maximum.

Avantageusement ledit moyen de liaison est une bielle orientée radialement en vis-à-vis de la zone de fixation et montée de façon libre en rotation dans un plan radial autour de chapes positionnées respectivement sur ledit moyeu et sur ladite zone de fixation, ladite bielle comportant à au moins une de ses extrémités un trou oblong orienté radialement, dans lequel passe l'axe de la chape correspondante. L'invention porte également sur un turboréacteur double flux comportant un carter d'échappement tel que décrit ci-dessus.

Elle porte enfin sur un turboréacteur double flux équipé d'un canal de flux froid et comportant un carter d'échappement tel que décrit ci-dessus, dans lequel le moyen de liaison supplémentaire traverse le canal de flux froid par un trou sans contact.

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence aux dessins schématiques annexés.

Sur ces dessins :
- la figure 1 est une vue schématique d'un turboréacteur selon l'art antérieur ;
- la figure 2 est une vue en perspective d'un carter d'échappement selon l'art antérieur, relié par un treillis de bielles à un anneau structural de support du canal de flux froid d'un turboréacteur;
- la figure 3 est une vue en perspective d'un turboréacteur selon l'invention, équipé de ses dispositifs d'accrochage à l'avion, et
- la figure 4 est une vue en coupe transversale du turboréacteur de la figure 3 dans le plan de son attache arrière.
- la figure 5 est une vue détaillée de la jonction entre l'anneau structural et un arceau de suspension du turboréacteur.

En se référant à la figure 1, on voit une représentation stylisée d'un turboréacteur à double flux, comprenant une soufflante 101, un corps primaire 102 comprenant à son aval un carter d'échappement 10 participant à la structure du moteur, et un cône arrière 107. Le flux primaire, qui traverse le corps primaire est éjecté dans une tuyère primaire 104 entourant le cône arrière, tandis que le flux secondaire, qui est issu de la soufflante, est guidé à l'aval de celle-ci par un canal de flux froid 105 se terminant par une tuyère secondaire 106. Le canal de flux froid 105 est rattaché, au niveau d'un anneau structural (non représenté), au carter d'échappement 10 par un treillis de bielles 103 qui sont inclinées par rapport à un plan radial du moteur, l'attache sur le canal de flux froid étant positionné en amont par rapport à celle sur le carter d'échappement.

Sur la figure 2, qui représente l'art antérieur, on voit le carter d'échappement 10 entouré par un anneau structural de support 7 destiné à maintenir, du côté aval, le canal de flux froid 105 de ce turboréacteur. Les efforts associés à ce maintien sont transmis au carter d'échappement 10 par un ensemble de six bielles 103, qui sont fixées à une de leurs extrémités sur l'anneau 7 et à l'autre extrémité sur le carter d'échappement par des fixations en forme de chapes. Telles que représentées sur la figure, les bielles 103 sont disposées, deux à deux, tangentiellement au carter d'échappement 10 et forment ainsi un triangle dont les sommets sont situés sur l'anneau de support 7. Leur partie rectiligne est classiquement aplatie de façon à être profilée pour offrir le moins de résistance possible au flux d'air secondaire qu'elles traversent.

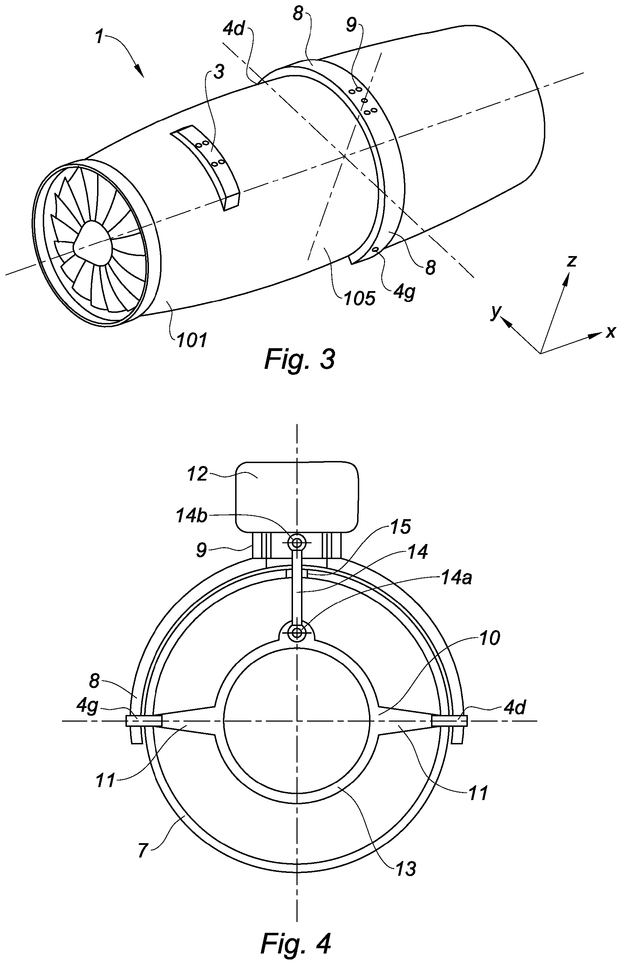

La figure 3 montre en perspective un turboréacteur 1 équipé de ses moyens d'attache à l'aéronef sur lequel il est monté. Il est ici représenté dans la configuration dite en pod, sous la voilure, mais il pourrait tout aussi bien être positionné latéralement par rapport au fuselage et être tenu par des attaches fixées soit sur le fuselage soit sur l'empennage de l'avion. Dans ce cas le turboréacteur est dans une position tournée de 90°, soit dans un sens soit dans l'autre, par rapport à la configuration représentée et les efforts de reprise du poids par les attaches sont répartis différemment.

Le turboréacteur comporte à l'avant, au niveau de son carter intermédiaire, un point d'attache avant 3 qui, classiquement transmet les efforts de poussée à l'aéronef, au moyen d'une rotule, et à l'arrière deux points d'attache arrière 4d et 4g, reliés au carter d'échappement et positionnés de façon diamétralement opposée l'un à l'autre. Sur ces deux points d'attache se fixe un arceau 8, semi-circulaire, qui forme un moyen de suspension arrière pour le turboréacteur. Cet arceau, dont les extrémités se fixent sur les deux points d'attache arrière 4g et 4d, comporte en son centre une zone de fixation 9 à un pylône ou à un mât de la structure de l'avion, de façon à remplir au niveau du carter d'échappement 10 les mêmes fonctions de transmission d'efforts que l'attache avant 3 au niveau du carter intermédiaire. Pour cela la zone de fixation 9 est montée sur le pylône 12 de l'avion au moyen d'une liaison qui est amortissante grâce à des matériaux élastomères, et qui autorise des degrés de liberté tant en rotation autour de l'axe transversal Oy qu'en translation selon l'axe longitudinal x.

En se référant maintenant à la figure 4 on voit le turboréacteur 1 selon l'invention, en coupe au niveau du carter d'échappement 10 et de l'anneau, non structural, de support 7 du canal de flux froid. Elle montre le détail de la suspension arrière et la façon dont le pylône 12 reprend les efforts qui sont transmis par le turboréacteur 1 au niveau de son carter d'échappement 10.

Le carter d'échappement 10 comporte deux bras rigides 11 qui s'étendent radialement à partir de son moyeu 13 et qui sont dimensionnés pour transmettre au pylône 12 de l'avion, l'intégralité des forces qui s'exercent sur lui, en utilisation normale. Ces bras traversent l'anneau de support 7 du canal de flux froid sans lui transmettre d'effort, à la différence de l'art antérieur, et viennent s'attacher directement sur les extrémités de l'arceau 8. De la sorte cet arceau reprend la totalité des efforts fournis par le turboréacteur dans un plan radial yOz, au niveau de son carter d'échappement. Quant à l'anneau de support 7, il est simplement attaché aux deux bras 11 pour leur transmettre les efforts (poids et couples de flexion ou de torsion) provenant du canal de flux froid. Cette situation est différente de celle de l'art antérieur représenté dans la demande FR1351414, où l'anneau 7 est un anneau structural qui reçoit, par l'intermédiaire de bielles, l'intégralité des efforts qui s'exercent sur le carter d'échappement 10, et qui les transmet au pylône 12 de l'avion. Dans la configuration selon l'invention cette transmission d'efforts à l'arceau de suspension 8 est assurée directement par les bras 11, sans intervention de l'anneau 7 de support du canal de flux froid qui peut donc, de ce fait, être allégé de façon très significative.

L'extrémité 4d ou 4g de chacun des bras 11 est conformée pour lui permettre de se fixer sur l'arceau de suspension 8. Des moyens d'attache (non représentés) de l'anneau 7 du canal de flux froid sur les bras 11 du carter d'échappement sont également prévus. Ils n'ont pour objet que de maintenir le canal de flux froid et ne participent pas, comme indiqué plus haut, à la transmission d'efforts entre le carter d'échappement 10 et la structure de l'aéronef.

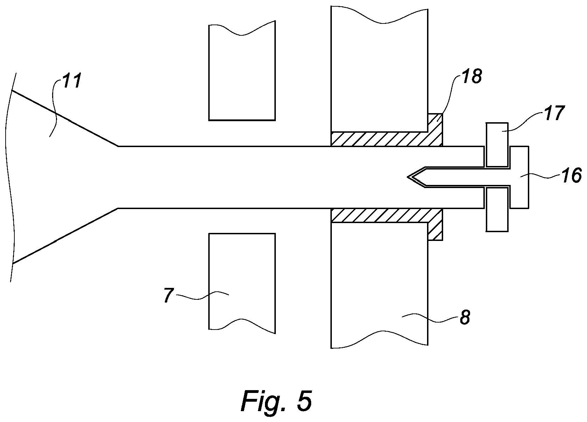

Pour assurer ces liaisons, des axes de liaison assurent, au niveau des extrémités 4d et 4g des bras 11 une condition de type pivot glissant, voire linéaire annulaire, entre les bras 11, l'anneau 7 et l'arceau 8. Un exemple d'une telle liaison, qui autorise les nécessaires déplacements entre ces pièces et prendre en compte leurs éventuelles déformations différentielles, est donné par la figure 5. Le bras 11 du carter d'échappement passe ainsi au travers d'un alésage pratiqué dans l'anneau de support 7, ce qui donne une possibilité de coulissement dans la direction transverse à l'anneau de support ; il est par ailleurs fixé à l'arceau de suspension 8 par un ensemble vis 16 et rondelle 17 qui forme une butée et qui le laisse libre en rotation par l'intermédiaire d'une douille 18 positionnée entre les deux pièces.

Enfin, il est nécessaire, lors du dimensionnement de la liaison entre le carter d'échappement 10 et le pylône 12 de prendre en compte des efforts exceptionnels, dit charges ultimes, qui peuvent survenir en cas, par exemple, d'une rupture d'aube. Alors que ce cas était couvert dans l'art antérieur par un dimensionnement approprié de l'anneau structural du canal de flux froid 105 et des bielles de liaison 103, la demanderesse s'est attachée à assurer la conservation de l'intégrité du moteur par un dispositif simple et le plus léger possible.

Pour cela il est prévu d'installer un dispositif qui est mis en attente en utilisation normale, et qui n'intervient que lorsqu'apparaissent des efforts dans l'arceau de suspension 8 qui dépassent un certain seuil. Ce dispositif de soulagement d'effort est ajouté à la liaison entre le carter d'échappement 10 et le pylône 12 décrite ci-dessus et il est dimensionné pour prendre en compte les efforts exceptionnels qui peuvent résulter, par exemple, d'une perte d'aubes.

Comme on peut le voir sur la figure 4, ce dispositif est constitué par une bielle 14, s'étendant radialement, qui est montée de façon libre en rotation dans un plan radial, par l'intermédiaire de liaisons tournantes à chacune de ses extrémités. Cette bielle est montée en attente, avec du jeu, dans des chapes, par exemple grâce à un trou oblong orienté radialement à au moins une de ses extrémités. Son extrémité intérieure est montée sur une première chape 14a qui est placée sur le carter d'échappement 10 tandis que son extrémité extérieure est montée sur une seconde chape 14b qui est placée sur la zone de fixation 9 de l'arceau 8 au pylône 12. Ces deux liaisons sont libres en rotation et la longueur de la bielle 14 est telle qu'elle n'est pas en butée contre les axes des chapes en utilisation normale. En revanche, en cas d'efforts anormalement élevés et de déplacements potentiellement importants du carter d'échappement, cette bielle vient en butée, d'un côté sur le carter d'échappement 10 et, d'un autre côté sur l'arceau 8 au niveau de sa zone de fixation 9, auquel elle transmet les efforts de maintien en position du carter d'échappement. Elle est dimensionnée pour résister à ces efforts, dits ultimes, et permet, en déchargeant les bras 11 et l'arceau de suspension 8 d'avoir à soutenir de tels efforts, de réduire leur masse.

La bielle 14 traverse l'anneau de support 7 du canal de flux froid au travers d'un trou sans contact 15, pour ne pas faire supporter des charges supplémentaires par cet anneau, faute de quoi il faudrait le dimensionner en conséquence, ce qui ferait augmenter sa masse.

La solution proposée par l'invention consiste ainsi à remplacer le treillis hyperstatique de bielles de l'art antérieur par un carter d'échappement 10 muni de bras intégrés, qui sont reliés à l'arceau de suspension 8. Le nombre de bras étant préférentiellement égal à deux, la liaison entre le carter d'échappement 10 et le pylône 12 est alors isostatique. Cette configuration est la configuration optimale en matière de réduction de la masse qui est nécessaire pour assurer le support du carter d'échappement.

Le dispositif de support du carter d'échappement, formé par ses deux bras 11, est complété par un dispositif de soulagement d'effort 14 permettant de reprendre les charges ultimes, telle que celles résultant, par exemple, d'une perte d'aube et de ne pas dimensionner les bras et l'arceau de suspension pour résister à de telles charges.

Quitte à dégrader les performances de la turbomachine au-delà d'un certain seuil de charges (par exemple sous charges ultimes), le dispositif proposé par l'invention permet de diminuer la masse de l'arceau de suspension 8, de diminuer son encombrement en termes d'épaisseur et d'améliorer la sécurité du système d'accrochage, tout en diminuant la masse du carter d'échappement.

## Revendications

1. Carter d'échappement équipé (8,10,11) pour un turboréacteur double flux pour aéronef, ledit carter d'échappement équipé comportant un carter d'échappement (10), des moyens de liaison (11) et un moyen de support (8), ledit moyen de support (8) étant destiné à être rattaché à la structure de l'aéronef, ledit carter d'échappement, de forme cylindrique, comportant un moyeu central (13) supporté par ledit moyen de support (8) par l'intermédiaire des moyens de liaison (11), **caractérisé en ce que** lesdits moyens de liaison sont des bras (11) rigidement fixés audit moyeu central (13) et s'étendant à partir de ce dernier en traversant un flux d'air secondaire du turboréacteur double flux, lesdits bras (11) étant configurés de manière à transmettre audit moyen de support (8) les efforts générés au niveau dudit moyeu central (13) par le turboréacteur en utilisation normale sans les transmettre à un canal de flux froid (105) dans lequel est guidé ledit flux d'air secondaire du turboréacteur.

2. Carter d'échappement équipé, selon la revendication 1, dans lequel les bras de liaison (11) sont des bras radiaux, au nombre de deux, positionnés de façon diamétralement opposée l'un par rapport à l'autre.

3. Carter d'échappement équipé, selon l'une des revendications 1 ou 2, dans lequel l'extrémité extérieure (4g, 4d) de chaque bras (11) est conformée pour se fixer sur le moyen de support (8) par une liaison de type pivot glissant ou linéaire annulaire.

4. Carter d'échappement équipé, selon l'une des revendications 1 à 3, dans lequel le moyen de support est un arceau de suspension (8) sur lequel sont fixées les extrémités extérieures (4g, 4d) des bras (11) et comportant une zone de fixation (9) apte à transmettre à la structure de l'aéronef les efforts transmis par ledit carter d'échappement.

5. Carter d'échappement équipé, selon la revendication 4, dans lequel l'arceau de suspension (8) est de forme circulaire entourant le canal de flux froid (105) du turboréacteur.

6. Carter d'échappement équipé, selon la revendication 5, dans lequel l'arceau de suspension (8) est semi-circulaire, les bras de liaison (11) étant au nombre de deux et positionnés selon un diamètre perpendiculaire au rayon passant par la zone de fixation.

7. Carter d'échappement équipé, selon l'une des revendications 4 à 6, comportant en outre un moyen de liaison supplémentaire (14) s'étendant entre son moyeu (13) et ladite zone de fixation (9), ledit moyen de liaison supplémentaire étant, en utilisation normale, positionné en attente sans transmission d'effort entre ledit moyeu (13) et ladite zone de fixation (9), et étant apte à transmettre des efforts entre ledit moyeu (13) et ladite zone de fixation (9) lorsqu'apparaissent des efforts dans ledit arceau de suspension (8) qui dépassent un certain seuil.

8. Carter d'échappement équipé, selon la revendication 7, dans lequel ledit moyen de liaison supplémentaire est une bielle (14) dimensionnée pour résister à des efforts anormalement élevés, dits ultimes, induisant des déplacements potentiellement importants du carter d'échappement.

9. Carter d'échappement équipé, selon la revendication 8, dans lequel ladite bielle (14) est orientée radialement en vis-à-vis de la zone de fixation (9) et montée de façon libre en rotation dans un plan radial autour de chapes (14a, 14b) positionnées respectivement sur ledit moyeu et sur ladite zone de fixation, ladite bielle comportant à au moins une de ses extrémités un trou oblong orienté radialement, dans lequel passe l'axe de la chape correspondante.

10. Carter d'échappement équipé, selon l'une des revendications 7 et 8, dans lequel le moyen de liaison supplémentaire (14) traverse le canal de flux froid (105) par un trou sans contact (15).

11. Turboréacteur double flux comportant un carter d'échappement (10) équipé selon l'une des revendications 1 à 10.

12. Turboréacteur double flux selon la revendication 11, dans lequel les bras de liaison (11) traversent le canal de flux froid (105).

13. Turboréacteur double flux selon la revendication 12, dans lequel les bras de liaison (11) traversent le canal de flux froid (105) au niveau d'un anneau de support (7) du canal de flux froid.

14. Turboréacteur double flux selon la revendication 13, dans lequel chaque bras (11) du carter d'échappement passe au travers d'un alésage pratiqué dans l'anneau de support (7).

15. Turboréacteur double flux selon l'une des revendications 13 à 14, dans lequel le canal de flux froid (105) est maintenu par les bras de liaison (11) par l'intermédiaire de moyens d'attache reliant l'anneau de support (7) aux bras de liaison (11), lesdits moyens d'attache ne participant pas à la transmission d'efforts entre le carter d'échappement (10) et la structure de l'aéronef.

## Patentansprüche

1. Montiertes Austrittsgehäuse (8, 10, 11) für ein Zweikreis-Turbofan-Triebwerk für ein Luftfahrzeug, wobei das montierte Austrittsgehäuse ein Austrittsgehäuse (10), Verbindungsmittel (11) und ein Stützmittel (8) umfasst, wobei das Stützmittel (8) vorgesehen ist, an der Struktur des Luftfahrzeugs befestigt zu werden, wobei das Austrittsgehäuse in zylindrischer Form eine vom Stützmittel (8) durch die Verbindungsmittel (11) gestützte Mittelnabe (13) umfasst, **dadurch gekennzeichnet, dass** die Verbindungsmittel starr an der Mittelnabe (13) befestigte Arme (11) sind und sich von dieser unter durchqueren eines sekundären Luftstroms des Zweikreis-Turbofan-Triebwerk erstrecken, wobei die Arme (11) so ausgebildet sind, dass sie die auf Höhe der Mittelnabe (13) vom Zweikreis-Turbofan-Triebwerk im Normalbetrieb erzeugten Kräfte auf das Stützmittel (8) übertragen, ohne diese auf ein Mantelstromgehäuse (105) zu übertragen, in dem der sekundäre Luftstrom des Zweikreis-Turbofan-Triebwerk geleitet wird.

2. Montiertes Austrittsgehäuse nach Anspruch 1, wobei die Verbindungsarme (11) zwei diametral gegenüber angeordnete Radialarme sind.

3. Montiertes Austrittsgehäuse nach einem der Ansprüche 1 oder 2, wobei das äußere Ende (4g, 4d) von jedem Arm (11) ausgebildet ist, am Stützmittel (8) durch eine Schwenk-/Gleitverbindung oder linear ringförmige Verbindung befestigt zu werden.

4. Montiertes Austrittsgehäuse nach einem der Ansprüche 1 bis 3, wobei das Stützmittel ein Aufhängebügel (8) ist, auf dem die äußeren Enden (4g, 4d) der Arme (11) befestigt sind, und umfassend einen Befestigungsbereich (9), der sich zum Übertragen der vom Austrittsgehäuse übertragenen Kräfte auf die Struktur des Luftfahrzeugs eignet.

5. Montiertes Austrittsgehäuse nach Anspruch 4, wobei der Aufhängebügel (8) eine runde Form aufweist, die das Mantelstromgehäuse (105) des Zweikreis-Turbofan-Triebwerks umgibt.

6. Montiertes Austrittsgehäuse nach Anspruch 5, wobei der Aufhängebügel (8) halbrund ist, wobei die Verbindungsarme (11) eine Zahl von Zwei aufweisen und entsprechend einem Durchmesser senkrecht zum Radius, der den Befestigungsbereich durchquert, angeordnet sind.

7. Montiertes Austrittsgehäuse nach einem der Ansprüche 4 bis 6, ferner umfassend ein zusätzliches Verbindungsmittel (14), das sich zwischen der Nabe (13) und dem Befestigungsbereich (9) erstreckt, wobei das zusätzliche Verbindungsmittel im Normalbetrieb im Standby ohne Kraftübertragung zwischen der Nabe (13) und dem Befestigungsbereich (9) angeordnet ist und sich zum Übertragen der Kräfte zwischen der Nabe (13) und dem Befestigungsbereich (9) eignet, wenn Kräfte im Aufhängebügel (8) auftreten, die eine bestimmte Schwelle überschreiten.

8. Montiertes Austrittsgehäuse nach Anspruch 7, wobei das zusätzliche Verbindungsmittel eine Schubstange (14) ist, die so dimensioniert ist, dass sie anomal hohen Kräfte, sogenannten Extremkräften, standhält, die zu gegebenenfalls großen Bewegungen des Austrittsgehäuses führen können.

9. Montiertes Austrittsgehäuse nach Anspruch 8, wobei die Schubstange (14) radial gegenüber dem Befestigungsbereich (9) ausgerichtet und frei drehbar auf einer radialen Ebene um die jeweils auf der Nabe und auf dem Befestigungsbereich angeordneten Gabelgelenke (14a, 14b) montiert ist, wobei die Schubstange wenigstens an einem ihrer Enden ein radial ausgerichtetes Langloch umfasst, das die Achse des entsprechenden Gabelgelenks durchquert.

10. Montiertes Austrittsgehäuse nach einem der Ansprüche 7 und 8, wobei das zusätzliche Verbindungsmittel (14) das Mantelstromgehäuse (105) durch ein Kontaktloses Loch (15) durchquert.

11. Zweikreis-Turbofan-Triebwerk umfassend ein montiertes Austrittsgehäuse (10) nach einem der Ansprüche 1 bis 10.

12. Zweikreis-Turbofan-Triebwerk nach Anspruch 11, wobei die Verbindungsarme (11) das Mantelstromgehäuse (105) durchqueren.

13. Zweikreis-Turbofan-Triebwerk nach Anspruch 12, wobei die Verbindungsarme (11) das Mantelstromgehäuse (105) auf der Höhe eines Stützrings (7) des Mantelstromgehäuses durchqueren.

14. Zweikreis-Turbofan-Triebwerk nach Anspruch 13, wobei jeder Arm (11) des Austrittsgehäuses eine in den Stützring (7) angebrachte Bohrung durchquert.

15. Zweikreis-Turbofan-Triebwerk nach einem der Ansprüche 13 bis 14, wobei das Mantelstromgehäuse (105) von den Verbindungsarmen (11) durch Befestigungsmittel, die den Stützring (7) mit den Verbindungsarmen (11) verbinden, gehalten wird, wobei die Befestigungsmittel nicht an der Übertragung von Kräften zwischen dem Austrittsgehäuse (10) und der Struktur des Luftfahrzeugs beteiligt sind.

## Claims

1. Equipped exhaust casing (8, 10, 11) of a bypass turbojet engine for an aircraft, said equipped exhaust casing comprising an exhaust casing (10), connection means (11) and a support means (8), said support means (8) being intended to be attached to the structure of the aircraft, said exhaust casing, which is cylindrical, comprising a central hub (13) supported by said support means (8) by said connection means (11), **characterised in that** said connection means are arms (11) which are rigidly connected to said central hub and extend therefrom, passing through a secondary air flow of the bypass turbojet engine, said arms (11) being designed to transmit to said support means (8) the stresses generated in the region of said central hub (13) by the turbojet engine in normal use without transmitting them to a cold-flow channel (105), in which said secondary air flow of the turbojet engine is guided.

2. Equipped exhaust casing according to claim 1, wherein the connection arms (11) are radial arms, of which there are two, which are positioned diametrically opposite one another.

3. Equipped exhaust casing according to either claim 1 or claim 2, wherein the outer end (4g, 4d) of each arm (11) is designed to be attached to the support means (8) by a connection of the sliding pivot type or annular linear type.

4. Equipped exhaust casing according to any of claims 1 to 3, wherein the support means is a suspension hoop (8) to which the outer ends (4g, 4d) of the arms (11) are attached and which comprises an attachment zone (9) which is capable of transmitting the stresses transmitted by said exhaust casing to the structure of the aircraft.

5. Equipped exhaust casing according to claim 4, wherein the suspension hoop (8) is circular and surrounds the cold-flow channel (105) of the turbojet engine.

6. Equipped exhaust casing according to claim 5, wherein the suspension hoop (8) is semi-circular, there being two connection arms (11), which are positioned along a diameter which is perpendicular to the radius passing through the attachment zone.

7. Equipped exhaust casing according to any of claims 4 to 6, further comprising an additional connection means (14) which extends between its hub (13) and said attachment zone (9), said additional connection means being in a standby position, in normal use, without transmitting stress between said hub and said attachment zone (9) and being capable of transmitting stresses between said hub (13) and said attachment zone (9) when stresses arise in said suspension hoop (8) which exceed a particular threshold.

8. Equipped exhaust casing according to claim 7, wherein said additional connection means is a connecting rod (14) which is dimensioned so as to withstand stresses which are abnormally high, referred to as ultimate stresses, causing potentially large movements of the exhaust casing.

9. Equipped exhaust casing according to claim 8, wherein said connecting rod (14) is oriented radially with respect to the attachment zone (9) and freely mounted in rotation in a radial plane about yokes (14a, 14b) respectively positioned on said hub and on said attachment zone, said connecting rod comprising a radially oriented slot at least one of its ends, through which slot the shaft of the corresponding yoke passes.

10. Equipped exhaust casing according to any of claims 7 or 8, wherein the additional connection means (14) passes through the cold-flow channel (105) by a hole (15) without contact.

11. Bypass turbojet engine comprising an equipped exhaust casing (10) according to any of claims 1 to 10.

12. Bypass turbojet engine according to claim 11, wherein the connection arms (11) pass through the cold-flow channel (105).

13. Bypass turbojet engine according to claim 12, wherein the connection arms (11) pass through the cold-flow channel (105) in the region of a support ring (7) of the cold-flow channel.

14. Bypass turbojet engine according to claim 13, wherein each arm (11) of the exhaust casing passes through a hole made in the support ring (7).

15. Bypass turbojet engine according to any of claims 13 to 14, wherein the cold-flow channel (105) is retained by the connection arms (11) by means of fastening means connecting the support ring (7) to the connection arms (11), said fastening means not participating in transmitting stresses between the exhaust casing (10) and the structure of the aircraft.
